# EUROPÄISCHE PATENTSCHRIFT

(11) **EP 2 108 537 B1**
(45) Veröffentlichungstag und Bekanntmachung des Hinweises auf die Patenterteilung: **15.06.2011**
(21) Anmeldenummer: 08007018.8
(22) Anmeldetag: 09.04.2008
(51) Int. Cl.: B60L 11/12

(54) **Dieselektrisches Antriebssystem, insbesondere für ein Schienenfahrzeug, und Betriebsverfahren**
Diesel-electric drive system, in particular for a rail vehicle, and corresponding operating method
Système d'entraînement électrique au diesel, en particulier pour un véhicule sur rails et procédé de fonctionnement

(43) Veröffentlichungstag der Anmeldung: 14.10.2009
(73) Patentinhaber: ALSTOM Transport SA, 92300 Levallois-Perret (FR)
(72) Erfinder: Söffker, Carsten, 38321 Denkte (DE)
(74) Vertreter: Dreiss

(56) Entgegenhaltungen:
- US-A- 4 900 944
- US-A1- 2006 061 307
- LENHARD D ET AL: "ELEKTRISCHE AUSRUESTUNG DES TRIEBZUGES LIREX BAUREIHE 618/619 FUER DB REGIO" ELEKTRISCHE BAHNEN, OLDENBOURG INDUSTRIEVERLAG, MUNCHEN, DE, Bd. 98, Nr. 8, 1. August 2000 (2000-08-01), Seiten 279/280,282,284-289, XP000959112 ISSN: 0013-5437

## Beschreibung

Die Erfindung betrifft ein dieselelektrisches Antriebssystem, insbesondere für ein Schienenfahrzeug, das mindestens zwei Diesel-Generator-Aggregate aufweist, von denen jedes einen Dieselmotor mit zugeordnetem Motorsteuergerät, einen durch den Dieselmotor antreibbaren permanenterregten Traktionsgenerator, und einen dem permanenterregten Traktionsgenerator nachgeordneten passiven Brückengleichrichter aufweist, wobei die Brückengleichrichter der mindestens zwei Diesel-Generator-Aggregate ausgangsseitig parallelgeschaltet sind, um gemeinsam einen Gleichspannungszwischenkreis des Antriebssystems mit elektrischer Energie zu versorgen.

Die Erfindung betrifft ferner ein Betriebsverfahren für ein derartiges Antriebssystem.

Ein Antriebssystem der eingangs genannten Art ist aus XP-000959112 bekannt.

Aus der US 2006/0061307 A1 ist ein Antriebskonzept für Lokomotiven bekannt, bei dem mehrere Dieselgeneratoraggregate zur Speisung eines Gleichspannungszwischenkreises vorgesehen sind.

Es ist Aufgabe der vorliegenden Erfindung, ein Antriebssystem der eingangs genannten Art und ein entsprechendes Betriebsverfahren dahingehend zu verbessern, dass unter Vermeidung eines komplexen Regelungsansatzes, der üblicherweise die Erfassung einer von einzelnen Diesel-Generator-Aggregaten abgegebenen Leistung erfordert, eine möglichst gleichmäßige Lastverteilung über die mehreren Diesel-Generator-Aggregate gegeben ist, um einen wirtschaftlichen Betrieb zu ermöglichen.

Diese Aufgabe wird bei dem Antriebssystem der eingangs genannten Art erfindungsgemäß dadurch gelöst, dass das Antriebssystem eine zentrale Steuerung aufweist, die dazu ausgebildet ist, jedem Motorsteuergerät der mindestens zwei Diesel-Generator-Aggregate denselben Drehzahlsollwert für den Betrieb des Dieselmotors vorzugeben.

Die erfindungsgemäße individuelle Drehzahlregelung, die völlig intern in einem Diesel-Generator-Aggregat abläuft, ermöglicht vorteilhaft den Verzicht auf zusätzliche externe Sensoren oder Regleranordnungen, wodurch neben einer gesteigerten Ausfallsicherheit auch das Potential für Kosteneinsparungen gegeben ist.

Darüber hinaus erlaubt das erfindungsgemäße Konzept auch eine unbegrenzte Skalierung des Antriebssystems dadurch, dass bei Bedarf einfach weitere gleichartige erfindungsgemäße Diesel-Generator-Aggregate zur Speisung des Gleichspannungszwischenkreises hinzugefügt werden können. Insbesondere muss hierfür keine zentrale, übergeordnete Regelung angepasst werden, da das Prinzip der vorliegenden Erfindung eine individuelle Drehzahlregelung einzelner Diesel-Generator-Aggregate vorsieht, die völlig von der Regelung anderer Diesel-Generator-Aggregate entkoppelt ist.

Ganz besonders vorteilhaft ist das erfindungsgemäße Antriebssystem ferner dadurch gekennzeichnet, dass das Antriebssystem eine zentrale Steuerung aufweist, die dazu ausgebildet ist, jedem Motorsteuergerät der mindestens zwei Diesel-Generator-Aggregate denselben Drehzahlsollwert für den Betrieb des Dieselmotors vorzugeben, wodurch sich eine besonders einfache Koordination des Betriebs der mehreren Diesel-Generator-Aggregate ergibt. Insbesondere ist in der zentralen Steuerung erfindungsgemäß - im Gegensatz zu herkömmlichen Systemen - kein übergeordneter, komplexer und daher auch fehleranfälliger Drehzahlregler erforderlich, weil die Drehzahlregelung vorteilhaft individuell in den einzelnen Diesel-Generator-Aggregaten erfolgt. Die zentrale Steuerung muss demnach für alle vorhandenen Diesel-Generator-Aggregate allein den gemeinsamen Drehzahlsollwert vorgeben, den sie beispielsweise in Abhängigkeit von Leistungsanforderungen ermittelt, die durch Verbraucher in an sich bekannter Weise signalisiert werden.

Eine sehr vorteilhafte Ausführungsform des erfindungsgemäßen Antriebssystems ist dadurch gekennzeichnet, dass in jedem Motorsteuergerät eine Einspritzregelung für den Betrieb des ihm zugeordneten Dieselmotors realisiert ist, bei der in Abhängigkeit eines dem Motorsteuergerät zugeführten Drehzahlsollwerts eine von mehreren verschiedenen Leistungs-Drehzahl-Kennlinien für den Betrieb des Dieselmotors auswählbar ist, um durch eine der ausgewählten Leistungs-Drehzahl-Kennlinie entsprechende Kraftstoffeinspritzung den Drehzahlsollwert einzustellen.

Erfindungsgemäß ist erkannt worden, dass sich bei einer geeigneten Parametrierung der betreffenden Kennlinien bezüglich der elektrischen Leistungsabgabe von zwei order mehr Diesel-Generator-Aggregaten ein dynamisches Gleichgewicht mit einer geringen, bleibenden Regelabweichung - bezogen auf eine über die Aggregate völlig gleichmäßig verteilte Leistungsabgabe - einstellt. Die Größe der Regelabweichung kann über eine Anpassung der Steigung der erfindungsgemäßen Kennlinien eingestellt werden.

Das erfindungsgemäße Antriebssystem ist besonders vorteilhaft einsetzbar bei Schienenfahrzeugen. Darüberhinaus kommt auch ein Einsatz bei anderen, nicht schienengebundenen Landfahrzeugen in Betracht, insbesondere bei Schwerlast-LKW.

Als eine weitere Lösung der Aufgabe der vorliegenden Erfindung ist ein Verfahren nach Patentanspruch 6 angegeben. Das erfindungsgemäße Verfahren ist dadurch gekennzeichnet, dass das Motorsteuergerät jedes der mindestens zwei Diesel-Generator-Aggregate individuell für das betreffende Diesel-Generator-Aggregat eine, insbesondere lastabhängige, Drehzahlregelung des ihm zugeordneten Dieselmotors ausführt.

Weitere vorteilhafte Ausgestaltungen der vorliegenden Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. '

In der Zeichnung zeigt:
- Figur 1: ein vereinfachtes Blockdiagramm einer Ausführungsform des erfindungsgemäßen Antriebssystems, und
- Figur 2: mehrere Kennlinien zur Realisierung einer Ausführungsform des erfindungsgemäßen Betriebsverfahrens.

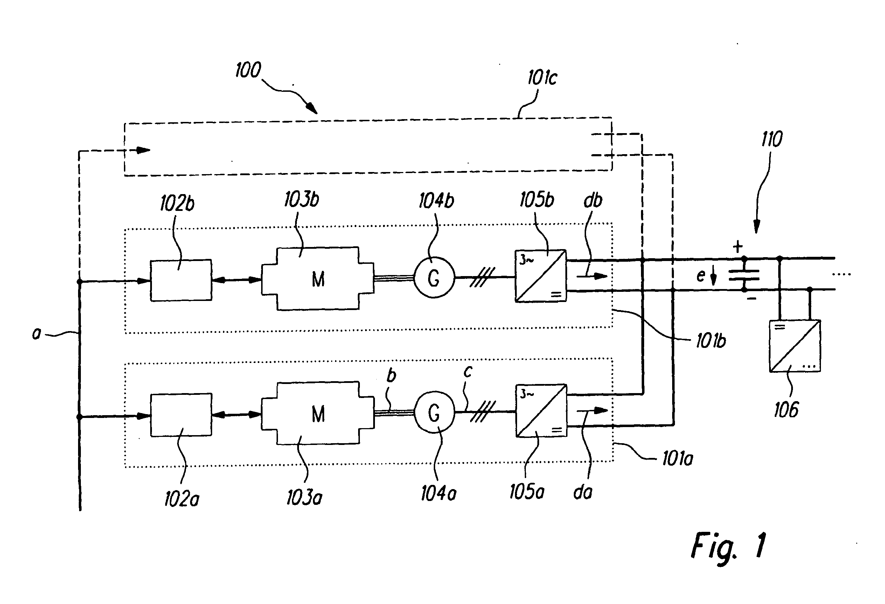

Figur 1 zeigt ein Blockdiagramm einer Ausführungsform des erfindungsgemäßen dieselelektrischen Antriebssystems 100, wie es beispielsweise in Schienenfahrzeugen eingesetzt wird, um einen unterschiedliche elektrische Verbraucher speisenden Gleichspannungszwischenkreis 110 mit elektrischer Energie zu versorgen.

Bei den elektrischen Verbrauchern, von denen in Figur 1 nur der Verbraucher 106 beispielhaft dargestellt ist, kann es sich gemäß der vorliegenden Anwendung in einem Schienenfahrzeug beispielsweise um Fahrmotoren des Schienenfahrzeugs, einen elektromechanischen Schwungradspeicher und/oder um einen Bremswiderstand und/oder um Hilfsbetriebeumrichter handeln, die ein Bordnetz, Klimaanlagen und ggf. weitere Systeme des Schienenfahrzeugs mit elektrischer Energie aus dem Gleichspannungszwischenkreis 110 versorgen.

Das erfindungsgemäße Antriebssystem 100 weist zwei Diesel-Generator-Aggregate 101a, 101b auf.

Das erste Diesel-Generator-Aggregat 101a weist einen Dieselmotor 103a mit zugeordnetem Motorsteuergerät 102a, einen durch den Dieselmotor 103a antreibbaren permanenterregtfen Traktionsgenerator 104a und einen dem permanenterregten Traktionsgenerator 104a nachgeordneten passiven Brückengleichrichter 105a auf.

Das Motorsteuergerät 102a steuert den Dieselmotor 103a in noch näher zu beschreibender Weise an, um den permanenterregten Traktionsgenerator 104a mit einer vorgebbaren Drehzahl anzutreiben. Die durch den permanenterregten Traktionsgenerator 104a dabei erhaltene elektrische Energie wird dem passiven Brückengleichrichter 105a zugeführt, der an seinem Ausgang eine gleichgerichtete Ausgangsspannung bereitstellt, mit der der Gleichspannungszwischenkreis 110 versorgt wird.

Die von dem passiven Brückengleichrichter 105a in den Gleichspannungszwischenkreis 110 gelieferte elektrische Leistung ist in Figur 1 durch den Pfeil da angedeutet.

Das zweite Diesel-Generator-Aggregat 101b weist denselben Aufbau und dieselbe Funktion auf wie das vorstehend beschriebene erste Diesel-Generator-Aggregat 101a.

Die Komponenten 102b, 103b, 104b, 105b des zweiten Diesel-Generator-Aggregats 101b sind dementsprechend identisch zu den Komponenten 102a, 103a, 104a, 105a des ersten Diesel-Generator-Aggregats 101a ausgebildet.

Die von dem passiven Brückengleichrichter 105b in den Gleichspannungszwischenkreis 110 gelieferte elektrische Leistung ist in Figur 1 durch den Pfeil db angedeutet.

Wie aus Figur 1 ersichtlich ist, sind die passiven Brückengleichrichter 105a, 105b der beiden Diesel-Geherator-Aggregate 101a, 101b ausgangsseitig parallel zueinander geschaltet, so dass beide gemeinsam den Gleichspannungszwischenkreis 110 speisen können.

Um eine gleichmäßige Lastaufteilung zwischen den beiden Diesel-Generator-Aggregaten 101a, 101b bezüglich der Versorgung des Gleichspannungszwischenkreises 110 mit elektrischer Energie sicherzustellen, ist erfindungsgemäβ vorgeschlagen, dass das Motorsteuergerät 102a, 102b jedes der mindestens zwei Diesel-Generator-Aggregate 101a, 101b dazu ausgebildet ist, individuell für das betreffende Diesel-Generator-Aggregat 101a, 101b eine, insbesondere lastabhängige, Drehzahlregelung des ihm zugeordneten Dieselmotors 103a, 103b auszuführen.

Dadurch ist es vorteilhaft möglich, jedem Diesel-Generator-Aggregat 101a, 101b allein einen Drehzahlsollwert a als Eingangsgröße vorzugeben.

Die erfindungsgemäße individuelle Drehzahlregelung, die völlig intern in dem betreffenden Diesel-Generator-Aggregat 101a, 101b abläuft, ermöglicht vorteilhaft den Verzicht auf zusätzliche externe Sensoren oder Regleranordnungen, wodurch neben einer gesteigerten Ausfallsicherheit auch Kosteneinsparungen möglich sind.

Darüberhinaus erlaubt das erfindungsgemäße Konzept auch eine unbegrenzte Skalierung des Antriebssystems 100 dadurch, dass bei Bedarf einfach weitere gleichartige erfindungsgemäße Diesel-Generator-Aggregate 101c zur Speisung des Gleichspannungszwischenkreises 110 hinzugefügt werden können. Insbesondere muss hierfür keine zentrale, übergeordnete Regelung angepasst werden, da das Prinzip der vorliegenden Erfindung eine individuelle Drehzahlregelung einzelner Diesel-Generator-Aggregate 101a, 101b, 101c vorsieht, die völlig von der Regelung der anderen Diesel-Generator-Aggregate entkoppelt ist.

Eine besonders vorteilhafte Ausführungsform des erfindungsgemäßen Antriebssystems ist dadurch gekennzeichnet, dass das Antriebssystem 100 eine zentrale Steuerung (nicht gezeigt) aufweist, die dazu ausgebildet ist, jedem Motorsteuerserät 1025a, 102b der mindestens zwei Diesel-Generator-Aggregate 101a, 101b denselben Drehzahlsollwert a für den Betrieb des Dieselmotors 103a, 103b vorzugeben, wodurch sich eine besonders einfache Koordination des Betriebs der mehreren Diesel-Generator-Aggregate 101a, 101b ergibt. Insbesondere ist in der zentralen Steuerung erfindungsgemäß - im Gegensatz zu herkömmlichen Systemen - kein übergeordneter, komplexer und daher auch fehleranfälliger Drehzahlregler erforderlich, weil die Drehzahlregelung vorteilhaft individuell in den einzelnen Diesel-Generator-Aggregaten 101a, 101b erfolgt. Die zentrale Steuerung muss demnach für alle vorhandenen Diesel-Generator-Aggregate allein den gemeinsamen Drehzahlsollwert a vorgeben, den sie beispielsweise in Abhängigkeit von Leistungsanforderungen ermittelt, die durch Verbraucher in an sich bekannter Weise signalisiert werden.

Nachstehend ist die Funktionsweise des erfindungsgemäßen Betriebsverfahren näher beschrieben.

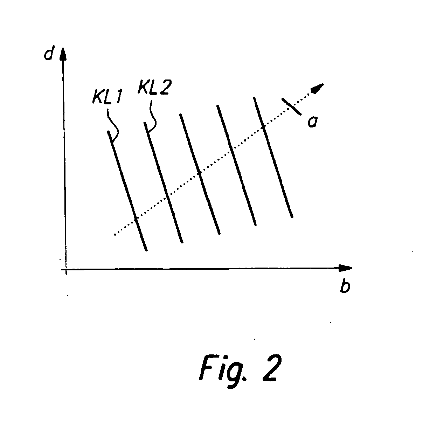

Jedes Motorsteuergerät 102a, 102b erhält erfindungsgemäß dieselbe Drehzahlvorgabe a von der zentralen Steuerung. Daraufhin wählt eine in dem Motorsteuergerät 102a, 102b. implementierte Einspritzregelung eine entsprechende Leistungs-Drehzahl-Kennlinie KL1, KL2 (Figur 2) in Abhängigkeit der Drehzahlvorgabe a, um die Istdrehzahl b (Figur 1) des Dieselmotors 103a, 103b an die Drehzahlvorgabe a anzunähern, d.h. die Solldrehzahl a einzuregeln.

Aufgrund der Permanenterregung des Generators 104a, 104b ist die Ausgangsspannung c nahezu proportional zu der Istdrehzahl b. Die am Ausgang des Gleichrichters 105a, 105 verfügbare Zwischenkreicspannung ist um einen entsprechenden Gleichrichtfaktor größer.

Figur 2 veranschaulicht das erfindungsgemäße Prinzip der lastabhängigen Drehzahlregelung durch das Steuergerät 102a, 102b des Dieselmotors 103a, 103b.

Das Diagramm der Figur 2 gibt die verschiedenen Leistungs-Drehzahl-Kennlinien KL1, KL2 wieder, die in der Einspritzregelung des Steuergeräts 102a, 102b implementiert sind und in Abhängigkeit der Drehzahlvorgabe a ausgewählt werden-, um die vorgegebene Drehzahl einregeln zu können. Die Kennlinien KL1, KL2 haben eine negative Steigung Ad/Ab. Anstelle der in Figur 2 beispielhaft abgebildeten Geradenabschnitte können die Kennlinien KL1, KL2 auch gestuft sein und/oder durch Hyperbelsegmente oder andere nichtlineare geometrische Elemente gebildet sein, solange sie eine im wesentlichen negative Steigung Δd/Δb aufweisen.

Auf der Ordinate des abgebildeten Diagramms ist die aktuell abgegebene elektrische Leistung d aufgetragen, vgl. auch die Bezugszeichen da, db aus Figur 1. Auf der Abszisse ist die Istdrehzahl b des betreffenden Dieselmotors 103a, 103b aufgetragen.

Der Grundzustand bei dem Betrieb des erfindungsgemäßen Antriebssystems 100 ist dadurch gekennzeichnet, dass eine nahezu optimale, gleichmäßige Lastverteilung über die beteiligten Diesel-Generator-Aggregate 101a, 101b vorliegt, weil diese einen im wesentlichen identischen Aufbau haben.

Liefert nun aufgrund von Parameterschwankungen und/oder fertigungsbedingten Abweichungen und/oder sonstigen ähnlichen Einflüssen das erste Diesel-Generator-Aggregat 101a etwas mehr Leistung d (bzw. "da" vgl. Figur 1) als das zweite Diesel-Generator-Aggregat 101b, so sinkt nach dem Diagramm aus Figur 2 die Istdrehzahl b des Dieselmotors 103a des ersten Diesel-Generator-Aggregats 101a. Die zu der Istdrehzahl b proportionale Ausgangsspannung c des Generators 104a sinkt dementsprechend ebenfalls, wie auch die abgegebene elektrische Leistung d bzw. da am Ausgang des passiven Brückengleichrichters 105a.

Falls die Ausgangsspannung c des Generators 104a z.B. aufgrund eines Defekts deutlich kleiner wird als die von dem zweiten Diesel-Generator-Aggregat 101b erzeugte Zwischenkreisspannung e, würde der Brückengleichrichter 105a sperren.

Erfindungsgemäß ist erkannt worden, dass sich bei einer geeigneten Parametrierung der betreffenden Kennlinien KL1, KL2 bezüglich der elektrischen Leistungsabgabe da, db von zwei oder mehr Diesel-Generator-Aggregaten 101a, 101b ein dynamisches Gleichgewicht mit einer geringen, bleibenden Regelabweichung - bezogen auf eine über die Aggregate 101a, 101b völlig gleichmäßig verteilte Leistungsabgabe - einstellt. Die Größe der Regelabweichung kann über eine Anpassung der Steigung Δd/Δb der erfindungsgemäßen Kennlinien KL1, KL2 eingestellt werden.

Das erfindungsgemäße Antriebssystem 100 ist aufgrund der internen Drehzahlregelung innerhalb der einzelnen Diesel-Generator-Aggregate 101a, 101b ohne weiteres skalierbar und bietet überdies eine gesteigerte Ausfallsicherheit, weil keine komplexen externen, übergeordneten Drehzahlregler erforderlich sind, sondern lediglich die Vorgabe der gemeinsamen Solldrehzahl a für alle Aggregate 101a, 101b, 101c.

Der Einsatz des erfindungsgemäßen Antriebssystems 100 in nicht-schienengebundenen Fahrzeugen wie z.B. Schwerlast-LKW kommt ebenfalls in Betracht.

## Patentansprüche

1. Dieselelektrisches Antriebssystem (100), insbesondere für ein Schienenfahrzeug, das mindestens zwei Diesel-Generator-Aggregate (101a, 101b) aufweist, von denen jedes einen Dieselmotor (103a, 103b) mit zugeordnetem Motorsteuergerät (102a, 102b), einen durch den Dieselmotor (103a, 103b) antreibbaren permanenterregten Traktionsgenerator (104a, 104b), und einen dem permanenterregten Traktionsgenerator (104a, 104b) nachgeordneten passiven Brückengleichrichter (105a, 105b) aufweist, wobei die Brückengleichrichter (105a, 105b) der mindestens zwei Diesel-Generator-Aggregate (101a, 101b) ausgangsseitig parallelgeschaltet sind, um gemeinsam einen Gleichspannungszwischenkreis (110) des Antriebssystems (100) mit elektrischer Energie zu versorgen, wobei das Motorsteuergerät (102a, 102b) jedes der mindestens zwei Diesel-Generator-Aggregate (101a, 101b) dazu ausgebildet ist, individuell für das betreffende Diesel-Generator-Aggregat (101a, 101b) eine, insbesondere lastabhängige, Drehzahlregelung des ihm zugeordneten Dieselmotors (103a, 103b) auszuführen, **dadurch gekennzeichnet, dass** das Antriebssystem (100) eine zentrale Steuerung aufweist, die dazu ausgebildet ist, jedem Motorsteuergerät (102a, 102b) der mindestens zwei Diesel-Generator-Aggregate (101a, 101b) denselben Drehzahlsollwert (a) für den Betrieb des Dieselmotors (103a, 103b) vorzugeben.

2. Antriebssystem (100) nach Anspruch 1, **dadurch gekennzeichnet, dass** keine den einzelnen Diesel-Generator-Aggregaten (101a, 101b) übergeordnete Drehzahlregelung für deren Dieselmotoren (103a, 103b) vorgesehen ist.

3. Antriebssystem (100) nach einem der vorstehenden Ansprüche, **dadurch gekennzeichnet, dass** in jedem Motorsteuergerät (102a, 102b) eine Einspritzregelung für den Betrieb des ihm zugeordneten Dieselmotors (103a, 103b) realisiert ist, bei der in Abhängigkeit eines dem Motorsteuergerät (102a, 102b) zugeführten Drehzahlsollwerts (a) eine von mehreren verschiedenen Leistungs-Drehzahl-Kennlinien (KL1, KL2) für den Betrieb des Dieselmotors (103a, 103b) auswählbar ist, um durch eine der ausgewählten Leistungs-Drehzahl-Kennlinie entsprechende Kraftstoffeinspritzung den Drehzahlsollwert (a) einzustellen.

4. Schienenfahrzeug mit mindestens einem Antriebssystem (100) nach einem der vorstehenden Ansprüche.

5. Verfahren zum Betreiben eines dieselelektrischen Antriebssystems (100), insbesondere für ein Schienenfahrzeug, das mindestens zwei Diesel-Generator-Aggregate (101a, 101b) aufweist, von denen jedes einen Dieselmotor (103a, 103b) mit zugeordnetem Motorsteuergerät (102a, 102b), einen durch den Dieselmotor (103a, 103b) antreibbaren permanenterregten Traktionsgenerator (104a, 104b), und einen dem permanenterregten Traktionsgenerator (104a, 104b) nachgeordneten passiven Brückengleichrichter (105a, 105b) aufweist, wobei die Brückengleichrichter (105a, 105b) der mindestens zwei Diesel-Generator-Aggregate (101a, 101b) ausgangsseitig parallelgeschaltet sind, um gemeinsam einen Gleichspannungszwischenkreis (110) des Antriebssystems (100) mit elektrischer Energie zu versorgen, wobei das Motorsteuergerät (102a, 102b) jedes der mindestens zwei Diesel-Generator-Aggregate (101a, 101b) individuell für das betreffende Diesel-Generator-Aggregat (101a, 101b) eine, insbesondere lastabhängige, Drehzahlregelung des ihm zugeordneten Dieselmotors (103a, 103b) ausführt, **dadurch gekennzeichnet, dass** jedem Motorsteuergerät (102a, 102b) der mindestens zwei Diesel-Generator-Aggregate (101a, 101b) von einer zentralen Steuerung derselbe Drehzahlsollwert (a) für den Betrieb des Dieselmotors (103a, 103b) vorgegeben wird.

6. Verfahren nach Anspruch 5, **dadurch gekennzeichnet, dass** in jedem Motorsteuergerät (102a, 102b) eine Einspritzregelung für den Betrieb des ihm zugeordneten Dieselmotors (103a, 103b) realisiert ist, bei der in Abhängigkeit eines dem Motorsteuergerät (102a, 102b) zugeführten Drehzahlsollwerts (a) eine von mehreren verschiedenen Leistungs-Drehzahl-Kennlinien (KL1, KL2) für den Betrieb des Dieselmotors (103a, 103b) ausgewählt wird, um durch eine der ausgewählten Leistungs-Drehzahl-Kennlinie entsprechende Kraftstoffeinspritzung den Drehzahlistwert (b) einzustellen.

7. Verwendung des Verfahrens nach einem der Ansprüche 5 bis 6 zum Betreiben eines dieselelektrischen Antriebssystems (100) eines Landfahrzeugs, insbesondere eines Schienenfahrzeugs.

## Claims

1. A diesel-electric drive system (100), in particular for a rail vehicle, which has at least two diesel generator units (101a, 101b), each of which has a diesel engine (103a, 103b) with an associated engine control unit (102a, 102b), a constantly excited traction generator (104-a, 104b) drivable by the diesel engine (103a, 103b), and a passive bridge rectifier (105a, 105b), downstream of the constantly excited traction generator (104a, 104b), the bridge rectifiers (105a, 105b) of the at least two diesel generator units (101a, 101b) being connected parallel on the output side, in order jointly to supply a direct voltage intermediate circuit (110) of the drive system (100) with electrical energy, and the engine control unit (102a, 102b) of each of the at least two diesel generator units (101a, 101b) is embodied for performing rpm control individually, in particular in load-dependent fashion, for the applicable diesel generator unit (101a, 101b) of the diesel engine (103a, 103b) associated with that engine control unit, **characterized in that** the drive system (100) has a central controller, which is embodied for specifying to each engine control unit (102a, 102b) of the at least two diesel generator units (101a, 101b), the same desired rpm (a) for operating the diesel engine (103a, 103b).

2. The drive system (100) as defined by claim 1, **characterized in that** no rpm control of higher rank than the individual diesel generator units (101a, 101b) is provided for their diesel engines (103a, 103b).

3. The drive system (100) as defined by one of the foregoing claims, **characterized in that** in each engine control unit (102a, 102b), injection control for the operation of the diesel engine (103a, 103b) associated with it is implemented, in which control, as a function of a desired rpm (a) supplied to the engine control unit (102a, 102b), one of a plurality of different characteristic power-rpm curves (KL1, KL2) for operating the diesel engine (103a, 103b) can be selected, in order to adjust the desired rpm (a) by means of fuel injection in accordance with the selected characteristic power-rpm curve.

4. A rail vehicle having at least one drive system (100) as defined by one of the foregoing claims.

5. A method for operating a diesel-electric drive system (100), in particular for a rail vehicle, which has at least two diesel generator units (101a, 101b), each of which has a diesel engine (103a, 103b) with an associated engine control unit (102a, 102b), a constantly excited traction generator (104a, 104b) drivable by the diesel engine (103a, 103b), and a passive bridge rectifier (105a, 105b), downstream of the constantly excited traction generator (104a, 104b), the bridge rectifiers (105a, 105b) of the at least two diesel generator units (101a, 101b) being connected parallel on the output side, in order jointly to supply a direct voltage intermediate circuit (110) of the drive system (100) with electrical energy, and the engine control unit (102a, 102b) of each of the at least two diesel generator units (101a, 101b) performs rpm control individually, in particular in load-dependent fashion, for the applicable diesel generator unit (101a, 101b) of the diesel engine (103a, 103b) associated with that engine control unit, **characterized in that** the same desired rpm (a) for operating the diesel engine (103a, 103b) is specified to each engine control unit (102a, 102b) of the at least two diesel generator units (101a, 101b) by a central controller.

6. The method as defined by claim 5, **characterized in that** in each engine control unit (102a, 102b), injection control for the operation of the diesel engine (103a, 103b) associated with it is implemented, in which control, as a function of a desired rpm (a) supplied to the engine control unit (102a, 102b), one of a plurality of different characteristic power-rpm curves (KL1, KL2) for operating the diesel engine (103a, 103b) is selected, in order to adjust the desired rpm (a) by means of fuel injection in accordance with the selected characteristic power-rpm curve.

7. Use of the method as defined by one of claims 5-6 for operating a diesel-electric drive system (100) of a land vehicle, in particular a rail vehicle.

## Revendications

1. Système d'entraînement diesel-électrique (100), notamment pour un véhicule sur rails, qui présente au moins deux groupes électrogènes diesel (101a, 101b), dont chacun présente un moteur diesel (103a, 103b) comportant un dispositif de commande de moteur (102a, 102b) associé, un générateur de traction à aimants permanents (104a, 104b) pouvant être entraîné par le moteur diesel (103a, 103b), et un redresseur à pont (105a, 105b) passif disposé à la suite du générateur de traction à aimants permanents (104a, 104b), les redresseurs à pont (105a, 105b) des au moins deux groupes électrogènes diesel (101a, 101b) étant connectés en parallèle côté sortie, pour alimenter ensemble en énergie électrique un circuit intermédiaire de tension continue (110) du système d'entraînement (100), le dispositif de commande de moteur (102a, 102b) de chacun des au moins deux groupes électrogènes diesel (101a, 101b) étant formé pour réaliser individuellement pour le groupe électrogène diesel (101a, 101b) concerné une régulation de la vitesse du moteur diesel (103a, 103b) qui lui est associé, notamment en fonction de la charge, **caractérisé en ce que** le système d'entraînement (100) présente une commande centrale qui est formée pour allouer à l'avance la même valeur de consigne de vitesse de rotation (a) à chaque dispositif de commande de moteur (102a, 102b) des au moins deux groupes électrogènes diesel (101a, 101b) pour le fonctionnement du moteur diesel (103a, 103b).

2. Système d'entraînement (100) selon la revendication 1, **caractérisé en ce qu'**il n'est pas prévu de régulation de la vitesse de rotation prévalant sur celle des différents groupes électrogènes diesel (101a, 101b) pour leurs moteurs diesel (103a, 103b).

3. Système d'entraînement (100) selon l'une quelconque des revendications précédentes, **caractérisé en ce qu'**un réglage d'injection est réalisé dans chaque dispositif de commande de moteur (102a, 102b) pour le fonctionnement du moteur diesel (103a, 103b) qui lui est associé lors duquel une parmi plusieurs courbes de puissance et de vitesse de rotation (KL1, KL2) différentes peut être sélectionnée pour le fonctionnement du moteur diesel (103a, 103b) en fonction d'une valeur de consigne de la vitesse de rotation (a) fournie au dispositif de commande de moteur (102a, 102b), pour régler la valeur de consigne de la vitesse de rotation (a) par une injection de carburant correspondant à la courbe de puissance et de vitesse de rotation sélectionnée.

4. Véhicule sur rails comportant au moins un système d'entraînement (100) selon l'une quelconque des revendications précédentes.

5. Procédé pour faire fonctionner un système d'entraînement diesel-électrique (100), notamment pour un véhicule sur rails, qui présente au moins deux groupes électrogènes diesel (101a, 101b) dont chacun présente un moteur diesel (103a, 103b) comportant un dispositif de commande de moteur (102a, 102b) associé, un générateur de traction à aimants permanents (104a, 104b) pouvant être entraîné par le moteur diesel (103a, 103b), et un redresseur à pont (105a, 105b) passif disposé à la suite du générateur de traction à aimants permanents (104a, 104b), les redresseurs à pont (105a, 105b) des au moins deux groupes électrogènes diesel (101a, 101b) étant connectés en parallèle côté sortie, pour alimenter ensemble en énergie électrique un circuit intermédiaire de tension continue (110) du système d'entraînement (100), le dispositif de commande de moteur (102a, 102b) de chacun des au moins deux groupes électrogènes diesel (101a, 101b) réalisant individuellement pour le groupe électrogène diesel (101a, 101b) concerné une régulation de la vitesse du moteur diesel (103a, 103b) qui lui est associé, notamment en fonction de la charge, **caractérisé en ce que** la même valeur de consigne de la vitesse de rotation (a) est allouée à l'avance par une commande centrale à chaque dispositif de commande de moteur (102a, 102b) des au moins deux groupes électrogènes diesel (101a, 101b) pour le fonctionnement du moteur diesel (103a, 103b).

6. Procédé selon la revendication 5, **caractérisé en ce qu'**un réglage d'injection est réalisé dans chaque dispositif de commande de moteur (102a, 102b) pour le fonctionnement du moteur diesel (103a, 103b) qui lui est associé lors duquel une parmi plusieurs courbes de puissance et de vitesse de rotation (KL1, KL2) différentes est sélectionnée pour le fonctionnement du moteur diesel (103a, 103b) en fonction d'une valeur de consigne de la vitesse de rotation (a) fournie au dispositif de commande de moteur (102a, 102b), pour régler la valeur réelle de la vitesse de rotation (b) par une injection de carburant correspondant à la courbe de puissance et de vitesse de rotation sélectionnée.

7. Utilisation du procédé selon l'une quelconque des revendications 5 à 6 pour faire fonctionner un système d'entraînement diesel-électrique (100) d'un véhicule terrestre, notamment un véhicule sur rails.
